# EUROPEAN PATENT APPLICATION

(11) **EP 4 818 496 A1**
(43) Date of publication of application: **07.10.2026**
(21) Application number: 26171034.7
(22) Date of filing: 07.04.2026
(51) Int. Cl.: F02C 7/32, F02C 7/36

(54) **GAS TURBINE PROPULSION SYSTEM WITH SPOOL COUPLING DEVICE**

(30) Priority: 04.04.2025 US 202519170922
(71) Applicant: RTX Corporation, Farmington, CT 06032 (US)
(72) Inventor: CLARK, Thomas E., Wells, 04090 (US); AKIN, John, Charlotte, 28205 (US); CHOE, Jung Muk, Glastonbury, 06033 (US); YAZICI, Murat, Glastonbury, 06033 (US)
(74) Representative: Dehns

(57) **Abstract**

A gas turbine engine (20) is provided that includes first and second spools (37, 39), an accessory gearbox (44), and a spool coupling device (46). The accessory gearbox, AG, (44) is in drive communication with the second spool (39). The accessory gearbox (44) includes an AG output shaft. The spool coupling device, SCD, (46) is in drive communication with the first spool (37) and the AG output shaft. The spool coupling device (46) includes an SCD accessory dock (66) and a transmission (62) that is disposable in first or second spool engaged configurations. In the first spool engaged configuration, rotational drive from the first spool (37) is provided to the SCD accessory dock (66), and in the second spool engaged configuration, rotational drive from the second spool (39) is provided to the SCD accessory dock (66).

## Description

### Technical Field

The present disclosure relates to gas turbine engine propulsion systems in general and to systems for extracting power from a multiple spool gas turbine engine propulsion system in particular.

### Background Information

In currently available gas turbine engine propulsion systems, engine accessories are often mounted on an accessory gearbox and are mechanically driven by the engine. Engine accessories may include one or more fuel pumps, hydraulic pumps, oil pumps, wound field generators, permanent magnet generators, de-oilers, permanent magnet alternators, and the like. Accessories may be driven off the high spool or the low spool of the engine. Very often mechanical power is extracted from the high spool and the low spool and transferred to an accessory gearbox via a tower shaft, or the like. The accessories are very often driven at a speed that is a function of the rotational speed of the spool driving the particular accessory.

### SUMMARY

According to an aspect of the present disclosure, a gas turbine engine is provided that includes a first spool, a second spool, an accessory gearbox, and a spool coupling device. The first spool includes a first compressor section and a first turbine section. The second spool includes a second compressor section and a second turbine section. The accessory gearbox (AG) is in drive communication with the second spool. The accessory gearbox includes an AG internal gear arrangement that includes an AG output shaft. The spool coupling device (SCD) is in drive communication with the first spool, and in drive communication with the AG output shaft. The spool coupling device includes an SCD accessory dock and a transmission that is disposable in a first spool engaged configuration or in a second spool engaged configuration. In the first spool engaged configuration, rotational drive from the first spool is provided through the transmission to the SCD accessory dock, and in the second spool engaged configuration, rotational drive from the second spool is provided through the transmission to the SCD accessory dock.

According to another aspect of the present disclosure, a gas turbine engine is provided that includes a first spool, a second spool, and accessory gearbox and a spool coupling device. The accessory gearbox (AG) is in drive communication with the second spool, and includes an AG output shaft. The spool coupling device (SCD) is in drive communication with the first spool and in drive communication with the AG output shaft. The spool coupling device includes an SCD accessory dock and a transmission that is disposable in a first spool engaged configuration or in a second spool engaged configuration. In the first spool engaged configuration, rotational drive from the first spool is provided through the transmission to the SCD accessory dock, and in the second spool engaged configuration, rotational drive from the second spool is provided through the transmission to the SCD accessory dock.

According to another aspect of the present disclosure, a gas turbine engine is provided that includes a first spool, a second spool, an accessory gearbox, a spool coupling device, and a controller. The accessory gearbox (AG) is in drive communication with the second spool and includes an AG output shaft. The spool coupling device (SCD) is in drive communication with the first spool and in drive communication with the AG output shaft. The spool coupling device includes an SCD accessory dock and a transmission. The controller is in communication with the transmission and a non-transitory memory storing instructions. The instructions when executed cause the controller to select between disposing the transmission in a first spool engaged configuration wherein the first spool is engaged and rotational drive from the first spool is provided through the transmission to the SCD accessory dock, or disposing the transmission in a second spool engaged configuration wherein the second spool is engaged and rotational drive from the second spool is provided through the transmission to the SCD accessory dock.

In any of the aspects described above, the accessory gearbox may include an AG internal gear arrangement that includes an AG output shaft, and wherein the spool coupling device is in drive communication with the AG output shaft.

In any of the aspects or embodiments described above, a first tower shaft may provide drive communication between the accessory gearbox and the second spool.

In any of the aspects or embodiments described above, the spool coupling device may include a housing and a SCD gear arrangement, and the transmission and the SCD gear arrangement may be disposed in the housing.

In any of the aspects or embodiments described above, the SCD gear arrangement may include a first SCD input shaft that is in drive communication with the AG output shaft.

In any of the aspects or embodiments described above, the SCD gear arrangement may include a second SCD input shaft that is in drive communication with the first spool.

In any of the aspects or embodiments described above, the transmission may be configured such that in the first spool engaged configuration, no rotational drive from the second spool is provided through the transmission to the SCD accessory dock.

In any of the aspects or embodiments described above, the transmission may be configured such that in the second spool engaged configuration, no rotational drive from the first spool is provided through the transmission to the SCD accessory dock.

In any of the aspects or embodiments described above, the transmission may include a first transmission (FT) disposable in an FT first spool engaged configuration or in an FT second spool engaged configuration, and a second transmission (ST) disposable in an ST first spool engaged configuration or in an ST second spool engaged configuration.

In any of the aspects or embodiments described above, the spool coupling device may include a housing and a SCD gear arrangement, and the transmission and the SCD gear arrangement may be disposed in the housing, and the SCD gear arrangement may include a first SCD input shaft and a second SCD input shaft, and the first transmission may be engaged with the first SCD input shaft, and the second transmission may be engaged with the second SCD input shaft.

In any of the aspects or embodiments described above, the first SCD input shaft may be in drive communication with the accessory gearbox.

In any of the aspects or embodiments described above, at least one of the first transmission or the second transmission may be a clutch.

In any of the aspects or embodiments described above, the SCD accessory dock may include a first SCD accessory dock and a second accessory dock. In the first spool engaged configuration, rotational drive from the first spool may be provided through the transmission to the first SCD accessory dock and to the second SCD accessory dock. In the second spool engaged configuration, rotational drive from the second spool may be provided through the transmission to the first SCD accessory dock and to the second SCD accessory dock.

In any of the aspects or embodiments described above, the first spool may be a low pressure spool and the second spool may be a high pressure spool.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and nonlimiting.

### BRIEF DESCRIPTION OF THE DRAWINGS

FIG. 1 is a diagrammatic sectional view of a gas turbine engine embodiment.
FIG. 2 is a diagrammatic sectional view of a present disclosure gas turbine engine embodiment including an accessory gear box and a spool coupling device.
FIG. 3 is a diagrammatic view of a present disclosure accessory gear box and spool coupling device embodiment.
FIG. 4 is a diagrammatic view of a present disclosure accessory gear box and spool coupling device embodiment.
FIG. 5 is a diagrammatic view of a present disclosure accessory gear box and spool coupling device embodiment.
FIG. 6 is a diagrammatic view of a present disclosure accessory gear box and spool coupling device embodiment.

### DETAILED DESCRIPTION

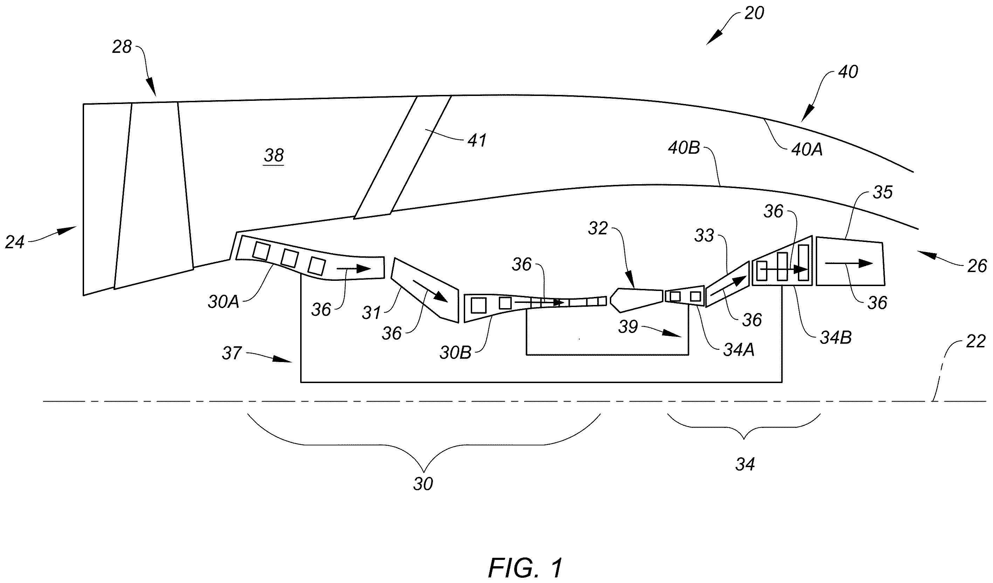

FIG. 1 shows a diagrammatic view of a gas turbine engine 20. The gas turbine engine 20 extends along an axial centerline 22 between an upstream airflow inlet 24 and a downstream exhaust 26. The gas turbine engine 20 includes a fan section 28, a compressor section 30, a combustion section 32, and a turbine section 34. The compressor section 30 includes a low-pressure compressor (LPC 30A) and a high-pressure compressor (HPC 30B). The turbine section 34 includes a high-pressure turbine (HPT 34A) and a low-pressure turbine (LPT 34B). The engine sections are arranged sequentially along the centerline 22 within an engine housing. The LPC 30A and the LPT 34B are connected to one another as part of a low pressure spool (LP spool 37). The HPC 30B and the HPT 34A are connected to one another as part of a high pressure spool (HP spool 39).

Air entering the gas turbine engine 20 through the airflow inlet 24 (forward of the fan section 28) is bisected between a core gas path 36 and a fan bypass air path 38. A portion of the air entering the gas turbine engine 20 passes through the fan section 28 and enters the core gas path 36. The core gas path 36 extends through the LPC 30A, the intermediate case 31, the HPC 30B, the combustion section 32, the HPT 34A, the mid-turbine frame 33, the LPT 34B, and the turbine exhaust case 35. Core gas exiting the LPT 34B exits the engine 20 via the exhaust 26. The remainder of the air entering the gas turbine engine 20 passes through the fan section 28 and enters the fan bypass air path 38 which is disposed radially outside of the core of the engine 20. The gas turbine engine 20 is diagrammatically shown in FIG. 1 engaged with a nacelle structure 40. The nacelle structure 40 is configured to provide an annular region radially outside of the core of the gas turbine engine 20. The annular region (which serves as the fan bypass air path 38) is defined by an outer radial structure 40A and an inner radial structure 40B. In some embodiments, a fan exit guide vane (FEGV 41) extends between the inner radial structure 40B and the outer radial structure 40A. The outer radial structure 40A defines the outer radial boundary of the fan bypass air path 38 and the inner radial structure 40B defines the inner radial boundary of the fan bypass air path 38.

The gas turbine engine 20 configuration diagrammatically shown in FIG. 1 is an example provided to facilitate the description herein. The present disclosure may be implemented in a variety of different gas turbine engine configurations and is not therefore limited to the gas turbine engine 20 configuration diagrammatically shown in FIG. 1. For example, in some gas turbine engine configurations the fan section 28 may be connected to a geared architecture (not shown) through a fan shaft. As another example, embodiments of the present disclosure may be utilized with gas turbine engines having a reverse flow architecture. As yet another example, the present disclosure is described herein in terms of a gas turbine engine having a twin spools (e.g., LP spool 37 and HP spool 39). Embodiments of the present disclosure may be utilized with gas turbine engines having more than two spools or engine shafts. In addition, the nacelle structure diagrammatically shown in FIG. 1 is provided to facilitate the description herein and the present disclosure is not limited to this nacelle structure example.

The terms "forward" and "aft" are used herein to indicate the relative position of a component or surface. In an axial engine such as that shown in FIG. 1, the fan section 28 is forward of the compressor section 30 and the turbine section 34 is aft of the compressor section 30. The terms "inner radial" and "outer radial" refer to relative radial positions from the engine centerline 22. An inner radial component or path is disposed radially closer to the engine centerline 22 than an outer radial component or path.

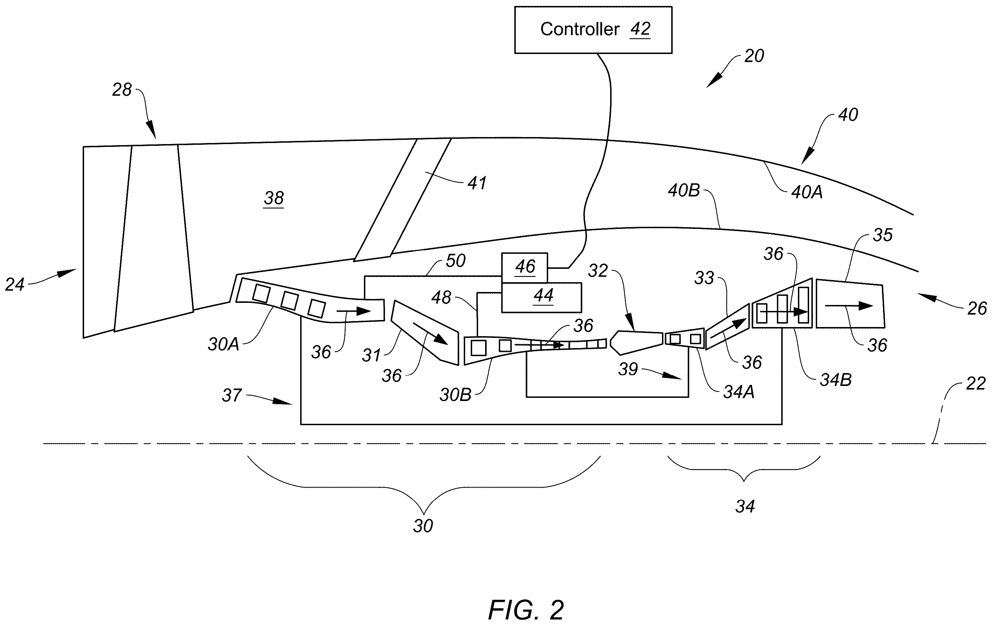

FIG. 2 is the diagrammatic view of a gas turbine engine 20 shown in FIG. 1, now further including an accessory gearbox 44 and a spool coupling device 46 engaged with one another according to an embodiment of the present disclosure. A first mechanical arrangement (e.g., a first tower shaft 48) is diagrammatically shown connecting the accessory gearbox 44 to the HP spool 39 and a second mechanical arrangement (e.g., a second tower shaft 50) is diagrammatically shown connecting the spool coupling device 46 to the LP spool 37. The present disclosure is not limited to using tower shafts for mechanical engagement with a spool. Other mechanical drives that allow a spool to provide rotational drive to the accessory gearbox 44 may be utilized. In some embodiments (e.g., like that shown in FIG. 2), the present disclosure may include a controller 42 in communication with, for example, components disposed within the spool coupling device 46 for control purposes.

The "controller" may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to accomplish the same algorithmically and/or coordination of system components. The controller 42 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 42 may be an independent component or may be integrated within another controller present with the gas turbine engine 20 (or aircraft). For example, the controller 42 may coordinate and/or be in communication with separate system controllers such as a FADEC (Full Authority Digital Engine Control) or an EEC (Electronic Engine Control) The present disclosure is not limited to any particular controller architecture unless specifically stated herein.

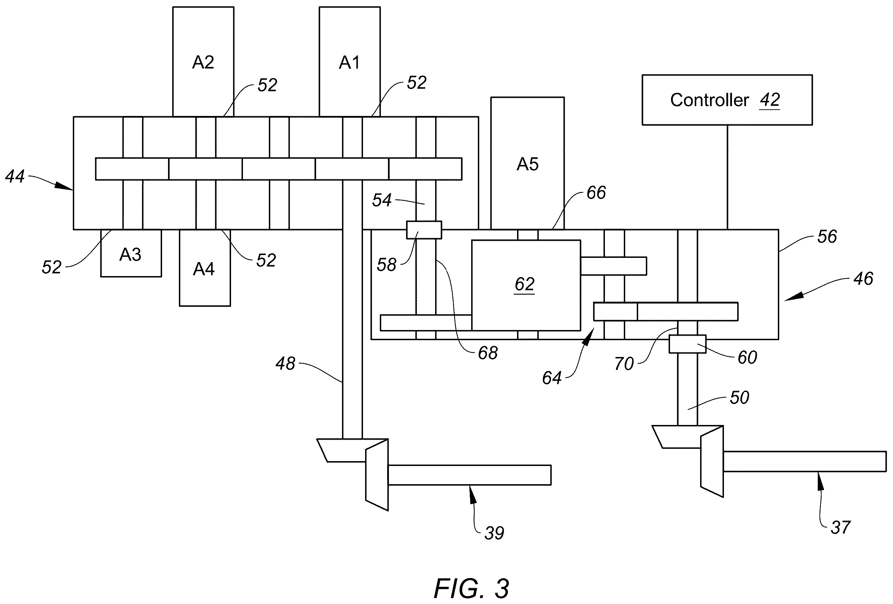

FIG. 3 diagrammatically illustrates an example of an accessory gearbox 44 and a spool coupling device 46 engaged with one another. FIG. 3 illustrates a first mechanical arrangement (e.g., a first tower shaft 48) that provides input rotational drive into the accessory gearbox 44 from the HP spool 39. To facilitate the description herein, the first mechanical arrangement will be referred to as the "first tower shaft 48" but the first mechanical arrangement is not limited to a tower shaft configuration. FIG. 3 also illustrates a second mechanical arrangement (e.g., a second tower shaft 50) that provides input rotational drive into the spool coupling device 46 from the LP spool 37. To facilitate the description herein, the second mechanical arrangement will be referred to as the "second tower shaft 50" but the second mechanical arrangement is not limited to a tower shaft configuration.

The accessory gearbox 44 may include an internal gear arrangement that transfers rotational drive from the input (e.g., from the first tower shaft 48) to a plurality of different accessory docks 52. Accessory devices (e.g., a fuel pump, a hydraulic pump, an oil pump, an electric motor, an electric generator, de-oilers, and the like) may be mounted at respective accessory docks 52 to be driven. In the embodiment diagrammatically shown in FIG. 3, four different accessories (A1, A2, A3, A4) are shown mounted on the accessory gearbox 44. As will be detailed herein, an output shaft 54 within the accessory gearbox 44 is configured to transfer rotational drive from the accessory gearbox 44 to the spool coupling device 46 via an HP spool coupler 58.

The spool coupling device 46 embodiment shown in FIG. 3 includes a housing 56, an HP spool coupler 58, an LP spool coupler 60, a transmission 62, a gear arrangement 64, and an accessory dock 66. The HP spool coupler 58 is configured to connect a rotational drive output (e.g., output shaft 54) from the accessory gearbox 44 with a rotational drive input (e.g., an HP input shaft 68) disposed within the spool coupling device 46. The LP spool coupler 60 is configured to connect an external rotational drive output (e.g., the second tower shaft 50) with a rotational drive input (e.g., an LP input shaft 70) disposed within the spool coupling device 46. The transmission 62 is engaged with the accessory dock 66. The transmission 62 is disposable in an LP spool engaged configuration or an HP spool engaged configuration. In the LP spool engaged configuration, the transmission 62 is configured to transfer rotational drive input from the LP spool 37 via the gear arrangement 64 to the accessory dock 66. In the LP spool engaged configuration, the transmission 62 is configured such that no rotational drive from the HP spool 39 (via the accessory gearbox 44) is transferred to the accessory dock 66. In the HP spool engaged configuration, the transmission 62 is configured to transfer rotational drive input from the HP spool 39 via the gear arrangement 64 to the accessory dock 66. In the HP spool engaged configuration, the transmission 62 is configured such that no rotational drive from the LP spool 37 is transferred to the accessory dock 66. The gear arrangement 64 includes a plurality of gears engaged with one another to provide a desired rotational speed ratio between the rotational speed of the rotational drive input from the HP spool 39 or the LP spool 37 and the transmission 62. The accessory dock 66 of the spool coupling device 46 is configured for mounting a selected accessory to permit that accessory to be driven. In the embodiment shown in FIG. 3, an accessory (A5) is mounted on the accessory dock 66 of the spool coupling device 46. The transmission 62 may be controlled (e.g., using the controller 42) to switch between the LP spool engaged configuration and the HP spool engaged configuration to enable the accessory (A5) to be driven at different rotational speeds; i.e., the accessory (A5) may be driven by the LP spool 37 or by the HP spool 39. In some embodiments, the transmission 62 may be disposable in a non-engaged configuration wherein neither the LP spool 37 nor the HP spool 39 are in drive communication with the spool coupling device accessory (A5).

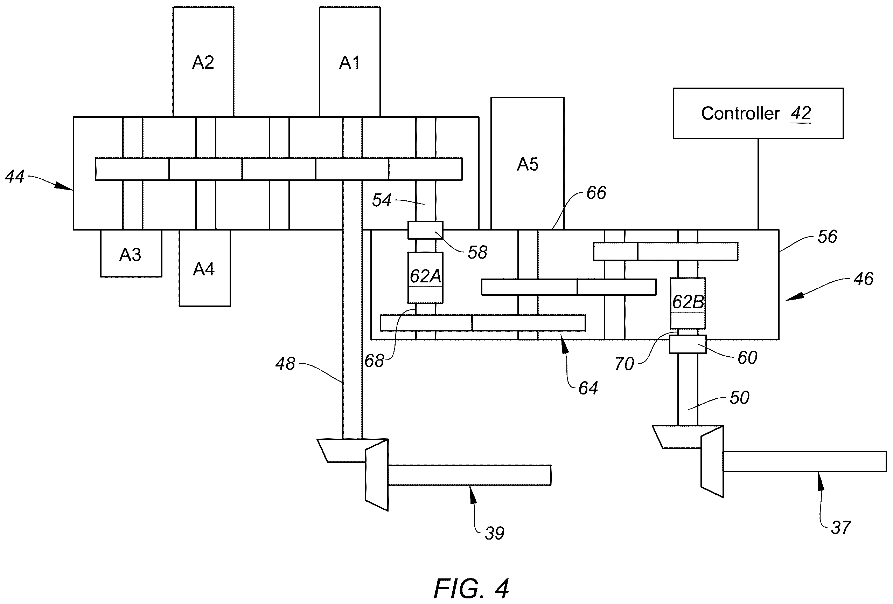

FIG. 4 diagrammatically illustrates an example of an accessory gearbox 44 and a spool coupling device 46 engaged with one another. FIG. 4 illustrates a first tower shaft 48 providing input rotational drive into the accessory gearbox 44 from the HP spool 39, and a second tower shaft 50 providing input rotational drive into the spool coupling device 46 from the LP spool 37. The accessory gearbox 44 may be configured as described above and shown in FIG. 3.

The spool coupling device 46 embodiment shown in FIG. 4 includes a housing 56, an HP spool coupler 58, an LP spool coupler 60, a first transmission 62A, a second transmission 62B, a gear arrangement 64, and an accessory dock 66.

The HP spool coupler 58 is configured to connect a rotational drive output (e.g., output shaft 54) from the accessory gearbox 44 with a rotational drive input (e.g., an HP input shaft 68) disposed within the spool coupling device 46. The first transmission 62A is engaged with the HP input shaft 68. The first transmission 62A may be configured as a clutch. A portion of the gear arrangement 64 is disposed to transfer rotational drive from the HP input shaft 68 to the accessory dock 66. The first transmission 62A is controllable (e.g., via the controller 42) and may be disposed in an HP spool engaged configuration and an HP spool disengaged configuration. In the HP spool engaged configuration, the first transmission 62A is configured to transfer rotational drive input from the HP spool 39 (from the accessory gear box 44) to the spool coupling device accessory dock 66 via the gear arrangement 64. In the HP spool disengaged configuration, the first transmission 62A is configured such that no rotational drive from the HP spool 39 (via the accessory gearbox 44) is transferred to the accessory dock 66 of the spool coupling device 46.

The LP spool coupler 60 is configured to connect an external rotational drive output (e.g., the second tower shaft 50) with a rotational drive input (e.g., an LP input shaft 70) disposed within the spool coupling device 46. The second transmission 62B is engaged with the LP input shaft 70. The second transmission 62B may be configured as a clutch. A portion of the gear arrangement 64 is disposed to transfer rotational drive from the LP input shaft 70 to the accessory dock 66 of the spool coupling device 46. The second transmission 62B is controllable (e.g., via the controller 42) and may be disposed in an LP spool engaged configuration and an LP spool disengaged configuration. In the LP spool engaged configuration, the second transmission 62B is configured to transfer rotational drive input from the LP spool 37 to the spool coupling device accessory dock 66 via the gear arrangement 64. In the LP spool disengaged configuration, the second transmission 62B is configured such that no rotational drive from the LP spool 37 is transferred to the accessory dock 66 of the spool coupling device 46. Hence, the first and second transmissions 62A, 62B may be controlled (e.g., via the controller 42) so that the accessory (A5) may be driven by the LP spool 37 or by the HP spool 39. In some embodiments, both the first and second transmissions 62A, 62B may be disposed in a non-engaged configuration wherein neither the LP spool 37 nor the HP spool 39 are in drive communication with a spool coupling device accessory (A5).

Like the embodiment shown in FIG. 3 and described above, the accessory dock 66 of the spool coupling device 46 shown in FIG. 4 is configured for mounting the selected accessory (e.g., A5) to permit the accessory to be driven. Like the embodiment shown in FIG. 3 and described above, the gear arrangement 64 shown in FIG. 4 includes a plurality of gears engaged with one another to provide desired rotational speed ratios.

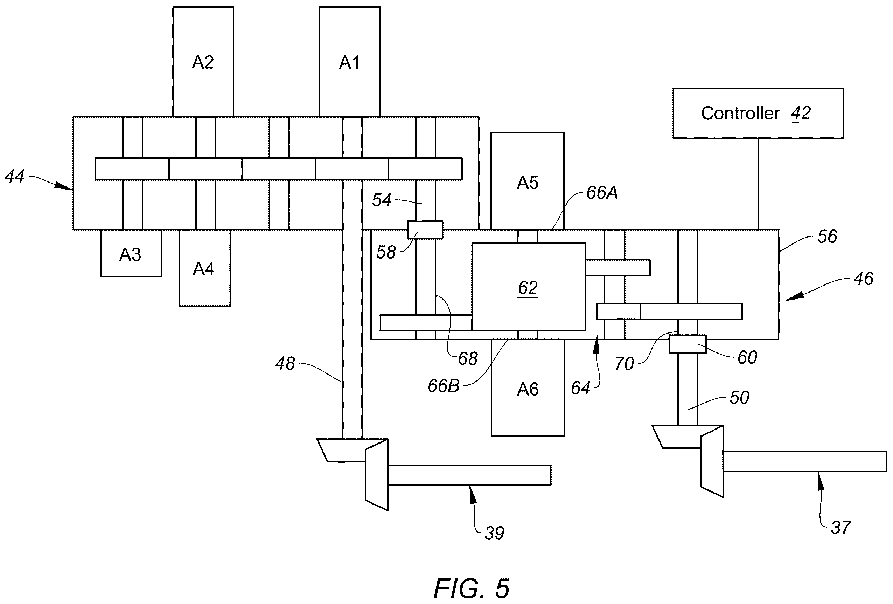

FIG. 5 diagrammatically illustrates an example of an accessory gearbox 44 and a spool coupling device 46 engaged with one another. The embodiment shown in FIG. 5 is a variation of the embodiment described herein and shown in FIG. 3. The embodiment shown in FIG. 5 includes a first accessory dock 66A and a second accessory dock 66B in selective drive communication with the transmission 62. The transmission 62 utilized in the embodiment shown in FIG. 5 is configured to drive one or both of a pair of accessories (A5, A6) disposed on opposite axial ends of the transmission 62. The transmission 62 may be controlled (e.g., via the controller 42) to switch between the LP spool engaged configuration and the HP spool engaged configuration to enable the accessories (A5, A6) to be driven by the LP spool 37 or by the HP spool 39 at different rotational speeds. In some embodiments, the transmission 62 may be disposable in a non-engaged configuration wherein neither the LP spool 37 nor the HP spool 39 are in drive communication with the spool coupling device accessories (A5, A6).

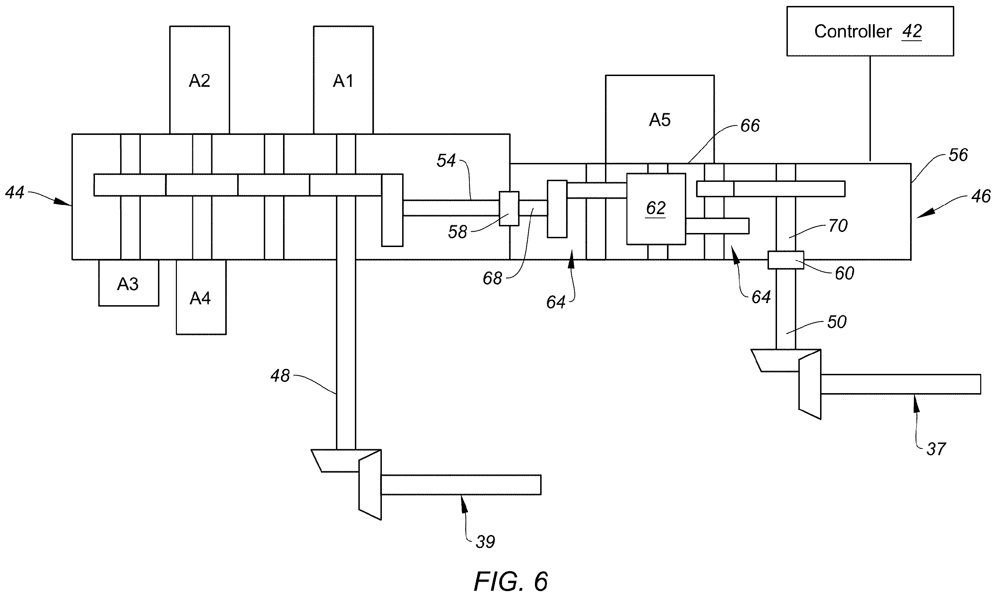

FIG. 6 diagrammatically illustrates an example of an accessory gearbox 44 and a spool coupling device 46 engaged with one another. In this embodiment, the accessory gearbox 44 and the spool coupling device 46 are disposed laterally side by side. FIG. 6 illustrates a first tower shaft 48 providing input rotational drive into the accessory gearbox 44 from the HP spool 39, and a second tower shaft 50 providing input rotational drive into the spool coupling device 46 from the LP spool 37.

In this embodiment, the spool coupling device 46 includes a housing 56, an HP spool coupler 58, an LP spool coupler 60, a transmission 62, a gear arrangement 64, and an accessory dock 66. The rotational drive output of the accessory gearbox 44 is oriented laterally within the accessory gearbox 44; e.g., the output shaft 54 is driven off of a ninety degree (90°) gear arrangement. In this embodiment, the rotational drive input (e.g., HP input shaft 68) of the spool coupling device 46 is oriented laterally. Hence, the HP spool coupler 58 is disposed on a lateral side of the accessory gearbox housing 56, and the laterally oriented accessory gearbox output shaft 54 and HP input shaft 68 are connected on a lateral side of the accessory gearbox 44. This arrangement gives the combined accessory gearbox 44 and spool coupling device 46 a low aspect ratio that is advantageous in certain gas turbine engine applications.

The LP spool coupler 60 is configured to connect an external rotational drive output (e.g., the second tower shaft 50) with a rotational drive input (e.g., an LP input shaft 70) disposed within the spool coupling device 46. The transmission 62 is engaged with the accessory dock 66. The transmission 62 is disposable in an LP spool engaged configuration or an HP spool engaged configuration. In the LP spool engaged configuration, the transmission 62 is configured to transfer rotational drive input from the LP spool 37 via the gear arrangement 64 to the accessory dock 66, and the transmission 62 is configured such that no rotational drive from the HP spool 39 is transferred to the accessory dock 66 of the spool coupling device 46. In the HP spool engaged configuration, the transmission 62 is configured to transfer rotational drive input from the HP spool 39 via the gear arrangement 64 to the accessory dock 66 of the spool coupling device 46, and the transmission 62 is configured such that no rotational drive from the LP spool 37 is transferred to the accessory dock 66 of the spool coupling device 46. The gear arrangement 64 includes a plurality of gears engaged with one another to provide a desired rotational input / output speed ratio. The accessory dock 66 of the spool coupling device 46 is configured for mounting the selected accessory to permit the accessory to be driven. In the embodiment shown in FIG. 6, an accessory (A5) is mounted on the accessory dock 66 of the spool coupling device 46. The transmission 62 may be controlled (e.g., via the controller 42) to switch between the LP spool engaged configuration and the HP spool engaged configuration to enable the accessory (A5) to be driven by the LP spool 37 or by the HP spool 39. In some embodiments, the transmission 62 may be disposable in a non-engaged configuration wherein neither the LP spool 37 nor the HP spool 39 are in drive communication with the spool coupling device accessory (A5).

The embodiments of the present disclosure described above and diagrammatically shown in FIGS. 3-6 are described in terms of an accessory (e.g., an electric motor or the like) being mounted on an accessory dock 52 of the accessory gearbox 44 or on an accessory dock 66 of the spool coupling device 46, where rotational drive from the HP spool 39 or the LP spool 37 may be input to that accessory. The present disclosure is not limited to configurations wherein accessories must be driven. In some embodiments, the present disclosure may include an accessory such as an electric machine that may be operated as a generator or as an electric motor, or an accessory such as a hydraulic machine that may be operated as a hydraulic pump or as a hydraulic motor. In these examples, the accessory may be configured to be driven (e.g., an electric generator, or a hydraulic pump, or the like) or may be configured (e.g., an electric motor, or a hydraulic motor, or the like) to provide rotational drive to a spool 37, 39.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and subcombinations thereof. Unless expressly excluded herein all such combinations and subcombinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A gas turbine engine (20), comprising:
a first spool (37);
a second spool (39);
an accessory gearbox, AG, (44) in drive communication with the second spool (39), the accessory gearbox (44) including an AG output shaft; and
a spool coupling device, SCD, (46) in drive communication with the first spool (37), and in drive communication with the AG output shaft, wherein the spool coupling device (46) includes an SCD accessory dock (66) and a transmission (62) that is disposable in a first spool engaged configuration or in a second spool engaged configuration;
wherein in the first spool engaged configuration, rotational drive from the first spool (37) is provided through the transmission (62) to the SCD accessory dock (66), and in the second spool engaged configuration, rotational drive from the second spool (39) is provided through the transmission (62) to the SCD accessory dock (66).

2. The gas turbine engine of claim 1, wherein the accessory gearbox (44) includes an AG internal gear arrangement that includes the AG output shaft.

3. The gas turbine engine of claim 1 or 2, wherein a first tower shaft (48) provides drive communication between the accessory gearbox (44) and the second spool (39).

4. The gas turbine engine of claim 1, 2 or 3, wherein the spool coupling device (46) includes a housing (56) and a SCD gear arrangement (64), and wherein the transmission (62) and the SCD gear arrangement (64) are disposed in the housing (56).

5. The gas turbine engine of claim 4, wherein the SCD gear arrangement (64) includes a first SCD input shaft that is in drive communication with the AG output shaft.

6. The gas turbine engine of claim 4 or 5, wherein the SCD gear arrangement (64) includes a second SCD input shaft that is in drive communication with the first spool (37).

7. The gas turbine engine of any preceding claim, wherein the transmission (62) is configured such that in the first spool engaged configuration, no rotational drive from the second spool (39) is provided through the transmission (62) to the SCD accessory dock (66).

8. The gas turbine engine of any preceding claim, wherein the transmission (62) is configured such that in the second spool engaged configuration, no rotational drive from the first spool (37) is provided through the transmission (62) to the SCD accessory dock (66).

9. The gas turbine engine of any preceding claim, wherein the transmission (62) includes a first transmission, FT, (62A) disposable in an FT first spool engaged configuration or in an FT second spool engaged configuration, and a second transmission, ST, (62B) disposable in an ST first spool engaged configuration or in an ST second spool engaged configuration.

10. The gas turbine engine of claim 9, wherein the spool coupling device (46) includes a/the housing (56) and a/the SCD gear arrangement (64), and wherein the transmission (62) and the SCD gear arrangement (64) are disposed in the housing (56); and
wherein the SCD gear arrangement (64) includes a first SCD input shaft, and a second SCD input shaft;
wherein the first transmission (62A) is engaged with the first SCD input shaft, and the second transmission (62B) is engaged with the second SCD input shaft.

11. The gas turbine engine of claim 10, wherein the first SCD input shaft is in drive communication with the accessory gearbox (44).

12. The gas turbine engine of claim 9, 10 or 11, wherein at least one of the first transmission (62A) or the second transmission (62B) is a clutch.

13. The gas turbine engine of any preceding claim, wherein the SCD accessory dock (66) includes a first SCD accessory dock (66A) and a second SCD accessory dock (66B); and
wherein in the first spool engaged configuration, rotational drive from the first spool (37) is provided through the transmission (62) to the first SCD accessory dock (66A) and to the second SCD accessory dock (66B), and in the second spool engaged configuration, rotational drive from the second spool (39) is provided through the transmission (62) to the first SCD accessory dock (66A) and to the second SCD accessory dock (66B).

14. The gas turbine engine of any preceding claim, wherein the first spool (37) includes a first compressor section (30A) and a first turbine section (34B), and the second spool (39) includes a second compressor section (30B) and a second turbine section (34A); and/or
wherein the first spool (37) is a low pressure spool and the second spool is a high pressure spool (39).

15. The gas turbine engine of any preceding claim, further comprising a controller (42) in communication with the transmission (62) and a non-transitory memory storing instructions, which instructions when executed cause the controller (42) to select between:
disposing the transmission (62) in the first spool engaged configuration wherein the first spool (37) is engaged and rotational drive from the first spool (37) is provided through the transmission (62) to the SCD accessory dock (66); or
disposing the transmission in the second spool engaged configuration wherein the second spool (39) is engaged and rotational drive from the second spool (39) is provided through the transmission (62) to the SCD accessory dock (66).
